# EUROPÄISCHE PATENTSCHRIFT

(11) **EP 1 572 485 B1**
(45) Veröffentlichungstag und Bekanntmachung des Hinweises auf die Patenterteilung: **06.10.2010**
(21) Anmeldenummer: 03810949.2
(22) Anmeldetag: 25.10.2003
(51) Int. Cl.: B60K 5/12

(54) **VERFAHREN ZUR SCHWINGUNGSD MPFUNG**
METHOD FOR SUPPRESSING VIBRATIONS
PROCEDE D'AMORTISSEMENT DE VIBRATIONS

(30) Priorität: 12.11.2002 DE 10252384
(43) Veröffentlichungstag der Anmeldung: 14.09.2005
(73) Patentinhaber: AUDI AG, 85045 Ingolstadt (DE)
(72) Erfinder: BAHL, Hans-Ulrich, 85139 Wettstetten (DE)
(86) Internationale Anmeldenummer: PCT/EP2003/011862
(87) Internationale Veröffentlichungsnummer: WO 2004/043725

(56) Entgegenhaltungen:
- DE-A- 3 912 058
- DE-A- 10 026 527
- DE-A- 19 711 689
- US-A- 5 236 182

## Beschreibung

Die vorliegende Erfindung betrifft ein Verfahren zur Schwingungsdämpfung eines mittels einer Anzahl von Lagerelementen an einem Kraftfahrzeug befestigten Schwingungssystems.

Abgasanlagen werden im allgemeinen mittels einer Anzahl von ringförmigen Gummielementen am Unterboden eines Kraftfahrzeugs befestigt, wobei die Gummielemente in Halteelemente eingehängt werden, die sowohl an der Abgasanlage als auch an den Unterboden angeformt sind. Diese Gummielemente haben jedoch den Nachteil, dass deren Elastizität bzw. Steifigkeit je nach Ausführung nur einen bestimmten Wert annehmen kann und daher für verschiedene Betriebszustände des Kraftfahrzeugs nur einen Kompromiss darstellt. Zudem ist das Material der Gummielemente einer Alterung unterworfen, welche deren Form und Elastizität nachteilig beeinflusst.

Aus der Druckschrift DE 100 26 527 A1 ist ein elastisches Lager für eine schwingungsisolierte Lagerung einer Abgasanlage an einem Fahrzeugboden bekannt. Dieses Lager ist hängend ausgebildet und weist eine mit Druckluft beaufschlagbare Druckkammer auf, die nach unten hin von einem elastischen Element begrenzt wird. Das elastische Element wölbt sich in Abhängigkeit von dem Luftdruck innerhalb der Druckkammer nach außen, wodurch eine daran angeformte Lageröse für die Abgasanlage in Abhängigkeit von dem Signal eines Lagesensors positionierbar ist. Durch die Höhe des Luftdrucks innerhalb der Druckkammer bzw. durch den Grad der Wölbung des elastischen Elements wird dabei auch die Elastizität des Lagers innerhalb gewisser Grenzen beeinflusst.

Darüber hinaus ist in der Druckschrift US-A 5,326,182 eine Anordnung zur Lagerung eines Motors an einem Kraftfahrzeug mit einer Anzahl von einstellbaren Lagerelementen beschrieben. Diese Lagerelemente sind konstruktiv so ausgestaltet, dass sie bezüglich ihrer elastischen Federkonstante und ihrer Phasenübertragung einstellbar sind. Mittels der Lagerelemente können insbesondere während des Leerlaufs der Brennkraft die Amplitude und die Phase der von dem Motor erzeugten Vibrationen geschwächt werden und können dementsprechend auch die auf einen Fahrzeuginsassen übertragenen Vibrationen reduziert werden.

Ausgehend von diesem Stand der Technik ist es Aufgabe der vorliegenden Erfindung ein verbessertes Verfahren zur Schwingungsdämpfung zu schaffen, welches in ganz besonderer Weise auf das bei einem Kraftfahrzeug auftretende komplexe Schwingungsverhalten eines aus Abgasanlage, Motor und Getriebe gebildeten Schwingungssystems abgestimmt ist und eine flexible Beeinflussung der Lagerelemente ermöglicht.

Gelöst wird diese Aufgabe, indem bei dem Schwingungssystem, welches Abgasanlage, Motor und Getriebe umfasst, die einzelnen Lagerelemente der Abgasanlage, des Motors und des Getriebes variable Steifigkeiten aufweisen, die in Abhängigkeit voneinander und in Abhängigkeit von den Betriebszuständen des Kraftfahrzeugs eingestellt werden. Die Steifigkeiten der Lagerelemente werden eingestellt, indem die einzelnen Lagerelemente von einer gemeinsamen elektrischen Einrichtung angesteuert werden, die mit dem Steuergerät des Kraftfahrzeugs in Verbindung steht. Durch diese Merkmalskombination, bei der die Steifigkeiten der zur Befestigung dienenden Lagerelemente unabhängig von deren Form jeweils innerhalb eines weiten Bereiches variierbar sind, können die Schwingungen der Abgasanlage, des Motors und des Getriebes bei verschiedenen Betriebszuständen des Kraftfahrzeugs optimal gedämpft werden, so dass am gesamten Schwingungssystem keine unerwünscht starken Schwingungen oder Resonanzen auftreten, oder können ausgewählte Schwingungen bzw. Frequenzbereiche ungedämpft durchgelassen oder gar verstärkt werden, so dass diese Schwingungen zur Erzeugung eines bestimmten "Fahrgefühls" herausgestellt werden.

Zweckmäßig werden die Betriebszustände des Kraftfahrzeugs anhand bestimmter Drehzahlbereiche von Motor und Getriebe definiert. Denn die an dem Schwingungssystem auftretenden Schwingungen lassen sich aus den bestimmten Drehzahlbereichen, die während der verschiedenen Betriebszustände, wie zum Beispiel Leerlaufbetrieb, Stadtbetrieb, Landstraßenbetrieb, Autobahnbetrieb oder Volllastbetrieb vorherrschen, ableiten und dann je nach Vorgabe zum Beispiel schwach oder stark dämpfen.

Weiterbildungsgemäß werden die Steifigkeiten der Lagerelemente in zeitlich kurzen Abständen verändert bzw. hin- und hergeschaltet, so dass die bei bestimmten Betriebszuständen des Kraftfahrzeugs auftretenden Resonanzen des Schwingungssystems aktiv unterdrückt oder gar angeregt werden. Diese Maßnahme ist besonders wirkungsvoll, wenn die einzelnen Lagerelemente in unterschiedlicher Art und Weise angesteuert werden.

Vorteilhaft sind die Steifigkeiten der Lagerelemente zudem von verschiedenen Fahrwerkfunktionen des Kraftfahrzeugs abhängig. Damit kann auch den durch Fahrbahnunebenheiten sowie durch Beschleunigungen bzw. Verzögerungen des Kraftfahrzeugs verursachten Einflüssen auf das Schwingungssystem begegnet werden.

Besonders vorteilhaft werden die Steifigkeiten der Lagerelemente außerdem vom Fahrer beeinflusst. Der Fahrer des Kraftfahrzeugs kann somit wählen, ob er zum Beispiel gemäß einer ersten Komforteinstellung eine überwiegend starke Schwingungsdämpfung bzw. eine weiche Aufhängung des Schwingungssystems, gemäß einer zweiten Sporteinstellung eine überwiegend schwache Schwingungsdämpfung bzw. eine harte Aufhängung des Schwingungssystems oder gemäß einer dritten Sondereinstellung eine Schwingungsdämpfung bzw. eine Aufhängung mit einer aktiven Resonanzdämpfung des Schwingungssystems wünscht. Natürlich sind die verschiedenen Einstellungen auch miteinander kombinierbar.

Werden die Steifigkeiten der Lagerelemente in einer für das jeweilige Schwingungssystem spezifischen Reihenfolge eingestellt, so trägt dies zu einer besonders flexiblen Schwingungsdämpfung bei. Denn die Schwingungen des Schwingungssystems pflanzen sich gemäß einer bestimmten Charakteristik fort, wobei diese Charakteristik der spezifischen Reihenfolge der Einstellung zugrunde gelegt wird.

Die Steifigkeiten der Lagerelemente werden eingestellt, indem die Lagerelemente stehend ausgeführt sind und ein elastisches Element mit einem Fluid bzw. einem Gel aufweisen, dessen Viskosität in Abhängigkeit von einer elektrischen Spannung verändert wird. Da die Steifigkeiten der Lagerelemente somit zu jeder Zeit innerhalb weiter Grenzen einstellbar sind, kann das Schwingungssystem stets in optimaler Weise gedämpft werden. Darüber hinaus kommt es dabei nicht zu einer unerwünschten Lageänderung des Schwingungssystems.

Die vorliegende Erfindung wird anhand der nachfolgenden Zeichnungsfiguren näher erläutert. Es zeigen:
- Fig. 1: Eine schematische Darstellung eines Kraftfahrzeugs mit ei- nem aus Abgasanlage, Motor und Getriebe bestehenden Schwingungssystem;
- Fig. 2: eine schematische Darstellung eines stehenden Lagerele- ments zur Befestigung des Schwingungssystems aus Fig. 1 am Kraftfahrzeug; und
- Fig. 3: drei Beispiele von unterschiedlichen Einstellungen der La- gerelemente bei verschiedenen Betriebszuständen des Kraft- fahrzeugs.

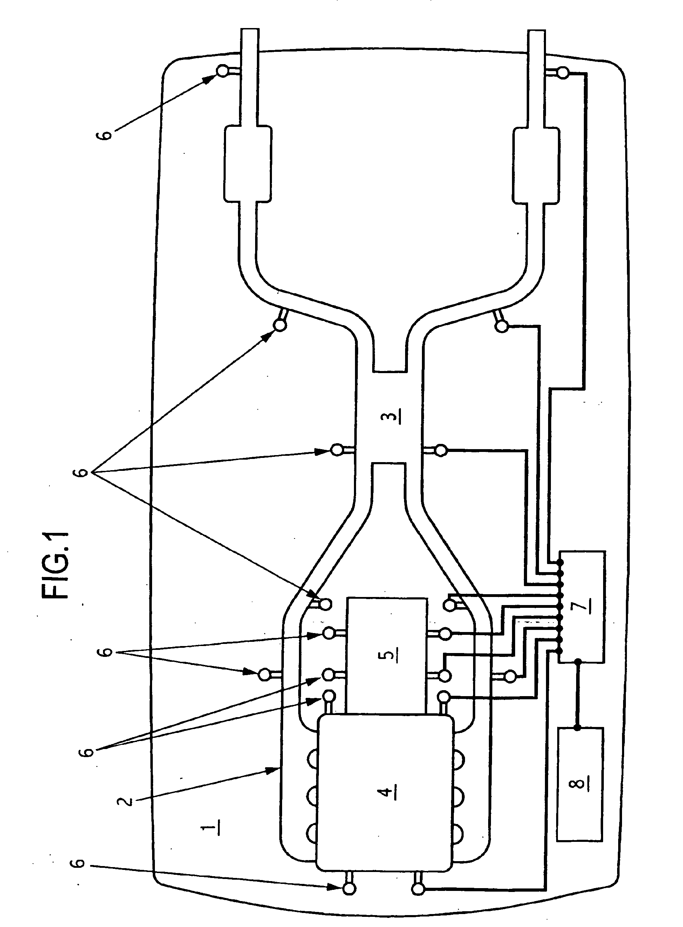

Das in Fig. 1 gezeigte Kraftfahrzeug 1 weist ein Schwingungssystem 2 auf, das eine Abgasanlage 3, einen Motor 4 und ein Getriebe 5 umfasst, wobei die Abgasanlage 3, der Motor 4 und das Getriebe 5 starr miteinander verbunden sind. Das Schwingungssystem 2 hat aufgrund der beim Betrieb des Kraftfahrzeugs veränderlichen Drehzahl von Motor 3 und Getriebe 4 sowie aufgrund seiner geometrischen Ausgestaltung ein sehr komplexes Schwingungsverhalten. Zur Dämpfung der auftretenden Schwingungen ist das Schwingungssystem 2 an verschiedenen Stellen durch eine Anzahl von Lagerelementen 6 im Motorraum bzw. am Unterboden des Kraftfahrzeugs 1 befestigt. Die Lagerelemente 6 werden über eine gemeinsame elektrische Einrichtung 7 angesteuert, welche die Steifigkeiten der Lagerelemente 6 in Abhängigkeit voneinander und in Abhängigkeit von den Betriebszuständen des Kraftfahrzeugs 1 verändert. Die Betriebszustände des Kraftfahrzeugs 1 erhält die elektrische Einrichtung dabei direkt von dem Steuergerät 8 des Kraftfahrzeugs 1.

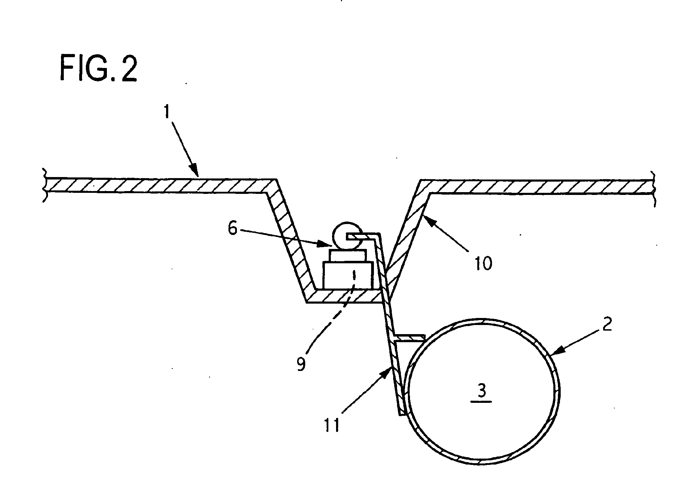

Die Lagerelemente 6 sind gemäß Fig. 2 stehend ausgebildet, indem sie ein elastisches Element 9 aufweisen, welches zylindrisch ausgebildet ist, mit seiner Unterseite auf einem am Kraftfahrzeug angeformten topfartigen Halter 10 aufliegt und mit seiner Oberseite einen an die Abgasanlage 3, den Motor 4 oder das Getriebe 5 des Schwingungssystems 2 angeformten abgewinkelten Bügel 11 trägt. Das elastische Element 9 enthält ein Fluid, welches durch das Anlegen einer elektrischen Spannung in seiner Viskosität veränderbar ist, so dass die Dämpfung zwischen dem Halter 10 und dem Bügel 11 bzw. zwischen der Karosserie des Kraftfahrzeugs 1 und dem Schwingungssystem 2 entsprechend beeinflussbar ist. Die Viskosität des elastischen Elements 9, d.h. die Steifigkeit des Lagerelements 6 kann also zu jeder Zeit innerhalb weiter Grenzen variiert werden.

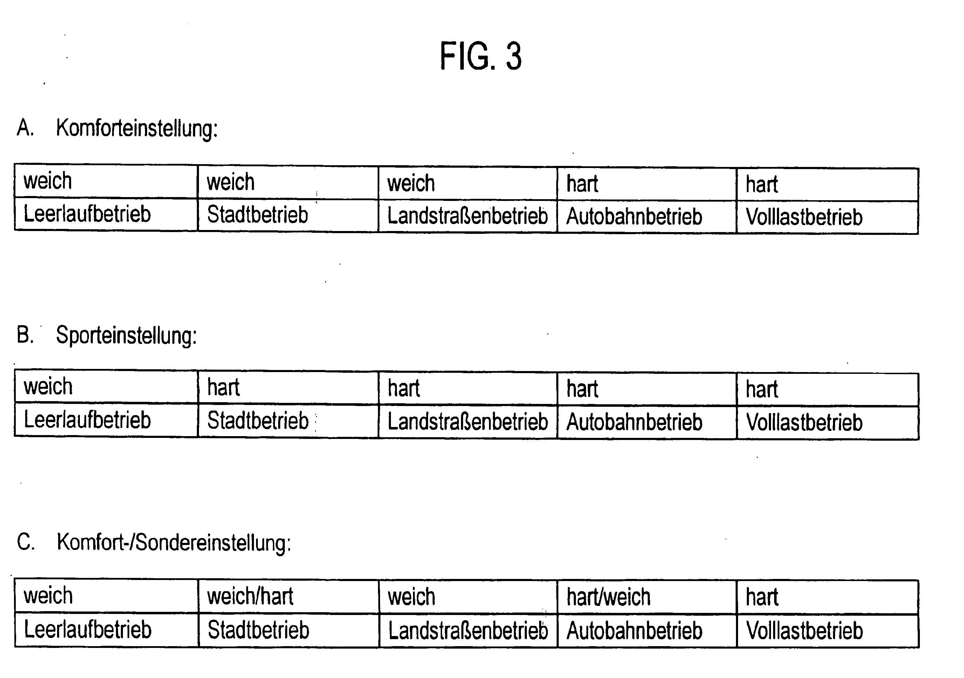

In der Fig. 3 sind schließlich drei Beispiele von möglichen Einstellungen der Lagerelemente 6 in Abhängigkeit von bestimmten Betriebszuständen des Kraftfahrzeugs 1 bzw. Drehzahlbereichen von Motor 4 und Getriebe 5 dargestellt.

Dabei ist gemäß dem ersten Beispiel A eine Komforteinstellung der Lagerelemente 6 gezeigt, welche vorsieht, dass deren Steifigkeit im Leerlaufbetrieb, im Stadtbetrieb und im Landstraßenbetrieb für eine starke Schwingungsdämpfung bzw. für eine "weiche" Aufhängung des Schwingungssystems 2 gering ist, während deren Steifigkeit im Autobahnbetrieb und im Vollastbetrieb für eine schwache Schwingungsdämpfung bzw. für eine "harte" Aufhängung des Schwingungssystems 2 hoch ist.

Gemäß dem zweiten Beispiel B ist eine Sporteinstellung der Lagerelemente 6 dargestellt, wobei deren Steifigkeit lediglich im Leerlaufbetrieb für eine starke Schwingungsdämpfung bzw. für eine "weiche" Aufhängung des Schwingungssystems 2 gering ist und im Stadtbetrieb, im Landstraßenbetrieb, im Autobahnbetrieb und im Vollastbetrieb für eine schwache Schwingungsdämpfung bzw. für eine "harte" Aufhängung des Schwingungssystems 2 hoch ist.

Und gemäß dem dritten Beispiel C ist eine Komforteinstellung der Lagerelemente 6 mit einer Sondereinstellung zur aktiven Resonanzdämpfung kombiniert. Diese Sondereinstellung sieht vor, dass die Steifigkeiten der Lagerelemente 6 im Stadtbetrieb und im Autobahnbetrieb beim Auftreten einer Resonanz in zeitlich kurzen Abständen zwischen der "weichen" Aufhängung und der "harten" Aufhängung des Schwingungssystems 2 hin- und hergeschaltet werden, um die Resonanz zu unterdrücken.

Zur Erzielung einer "weichen", "mittleren" oder "harten" Aufhängung des Schwingungssystems 2 ist es nicht erforderlich, die Steifigkeit aller Lagerelemente 6 in jeweils gleicher Weise zu beeinflussen. Vielmehr ist es gemäß der vorliegenden Erfindung wichtig, die verschiedenen Lagerelemente 6 in Abhängigkeit von ihren jeweiligen Positionen unterschiedlich anzusteuern, um eine besonders flexible Dämpfung des Schwingungssystems 2 zu verwirklichen.

### Liste der Bezugszeichen:

- 1: Kraftfahrzeug
- 2: Schwingungssystem
- 3: Abgasanlage
- 4: Motor
- 5: Getriebe
- 6: Lagerelement
- 7: elektrische Einrichtung
- 8: Steuergerät
- 9: elastisches Element
- 10: Halter
- 11: Bügel

## Patentansprüche

1. Verfahren zur Schwingungsdämpfung eines mittels einer Anzahl von Lagerelementen an einem Kraftfahrzeug befestigten Schwingungssystems, welches Abgasanlage, Motor und Getriebe umfasst, wobei die einzelnen Lagerelemente (6) der Abgasanlage (3), des Motors (4) und des Getriebes (5) veränderbare Steifigkeiten aufweisen, die in Abhängigkeit voneinander und in Abhängigkeit von den Betriebszuständen des Kraftfahrzeugs (1) eingestellt werden, und wobei die Steifigkeiten der Lagerelemente (6) eingestellt werden, indem die einzelnen Lagerelemente (6) von einer gemeinsamen elektrischen Einrichtung (7) angesteuert werden, die mit dem Steuergerät (8) des Kraftfahrzeugs (1) in Verbindung steht.

2. Verfahren nach Anspruch 1, **dadurch gekennzeichnet, dass** die Betriebszustände des Kraftfahrzeugs (1) anhand bestimmter Drehzahlbereiche von Motor (4) und Getriebe (5) definiert werden.

3. Verfahren nach Anspruch 1 oder 2, **dadurch gekennzeichnet, dass** die Steifigkeiten der Lagerelemente (6) in zeitlich kurzen Abständen verändert bzw. hin- und hergeschaltet werden, so dass die bei bestimmten Betriebszuständen des Kraftfahrzeugs (1) auftretenden Resonanzen des Schwingungssystems (2) aktiv unterdrückt werden.

4. Verfahren nach einem der Ansprüche 1 bis 3, **dadurch gekennzeichnet, dass** die Steifigkeiten der Lagerelemente (6) von verschiedenen Fahrwerkfunktionen des Kraftfahrzeugs (1) abhängig sind.

5. Verfahren nach einem der Ansprüche 1 bis 4, **dadurch gekennzeichnet, dass** die Steifigkeiten der Lagerelemente (6) vom Fahrer beeinflusst werden.

6. Verfahren nach einem der Ansprüche 1 bis 5, **dadurch gekennzeichnet, dass** die Steifigkeiten der Lagerelemente (6) in einer für das jeweilige Kraftfahrzeug (1) spezifischen Reihenfolge eingestellt werden.

7. Verfahren nach einem der Ansprüche 1 bis 6, **dadurch gekennzeichnet, dass** die Steifigkeiten der Lagerelemente (6) eingestellt werden, indem die Lagerelemente (6) stehend ausgeführt sind und ein elastisches Element (9) mit einem Fluid bzw. einem Gel aufweisen, dessen Viskosität in Abhängigkeit von einer elektrischen Spannung verändert wird.

## Claims

1. Method for damping vibrations in a vibratory system fastened by means of a number of mounting elements on a motor vehicle, which vibratory system comprises an exhaust system, engine and gearbox, with the individual mounting elements (6) of the exhaust system (3), of the engine (4) and of the gearbox (5) having variable stiffnesses which can be adjusted as a function of one another and as a function of the operating states of the motor vehicle (1), and with the stiffnesses of the mounting elements (6) being adjusted by virtue of the individual mounting elements (6) being actuated by a common electrical device (7) which is connected to the control unit (8) of the motor vehicle (1).

2. Method according to Claim 1, **characterized in that** the operating states of the motor vehicle (1) are defined on the basis of certain rotational speed ranges of the engine (4) and gearbox (5).

3. Method according to Claim 1 or 2, **characterized in that** the stiffnesses of the mounting elements (6) can be varied, or switched back and forth, in short time intervals such that the resonances of the vibratory system (2) occurring in certain operating states of the motor vehicle (1) are actively suppressed.

4. Method according to one of Claims 1 to 3, **characterized in that** the stiffnesses of the mounting elements (6) are dependent on different chassis functions of the motor vehicle (1).

5. Method according to one of Claims 1 to 4, **characterized in that** the stiffnesses of the mounting elements (6) are influenced by the driver.

6. Method according to one of Claims 1 to 5, **characterized in that** the stiffnesses of the mounting elements (6) are adjusted in a sequence specific to the respective motor vehicle (1).

7. Method according to one of Claims 1 to 6, **characterized in that** the stiffnesses of the mounting elements (6) are adjusted by virtue of the mounting elements (6) being of standing design and having an elastic element (9) with a fluid or a gel whose viscosity is varied as a function of an electrical voltage.

## Revendications

1. Procédé d'amortissement des vibrations d'un système oscillant fixé au moyen d'une pluralité d'éléments de palier sur un véhicule automobile, qui comprend une installation de gaz d'échappement, un moteur et une transmission, les éléments de palier individuels (6) de l'installation de gaz d'échappement (3), du moteur (4) et de la transmission (5) présentant des rigidités variables qui sont ajustées en fonction les unes des autres et en fonction des états de fonctionnement du véhicule automobile (1), les rigidités des éléments de palier (6) étant ajustées en commandant les éléments de palier individuels (6) par un dispositif électrique commun (7) qui est en liaison avec l'appareil de commande (8) du véhicule automobile (1).

2. Procédé selon la revendication 1, **caractérisé en ce que** les états de fonctionnement du véhicule automobile (1) sont définis à l'aide de plages de régime déterminées du moteur (4) et de la transmission (5).

3. Procédé selon la revendication 1 ou 2, **caractérisé en ce que** les rigidités des éléments de palier (6) sont modifiées et commutées en alternance à courts intervalles de temps, de sorte que les résonances du système oscillant (2) se produisant aux états de fonctionnement déterminés du véhicule automobile (1) soient activement supprimées.

4. Procédé selon l'une quelconque des revendications 1 à 3, **caractérisé en ce que** les rigidités des éléments de palier (6) dépendent de différentes fonctions du châssis du véhicule automobile (1).

5. Procédé selon l'une quelconque des revendications 1 à 4, **caractérisé en ce que** les rigidités des éléments de palier (6) sont influencées par le conducteur.

6. Procédé selon l'une quelconque des revendications 1 à 5, **caractérisé en ce que** les rigidités des éléments de palier (6) sont ajustées en succession spécifique pour le véhicule automobile particulier (1).

7. Procédé selon l'une quelconque des revendications 1 à 6, **caractérisé en ce que** les rigidités des éléments de palier (6) sont ajustées en réalisant les éléments de palier (6) de manière fixe et en les munissant d'un élément élastique (9) avec un fluide ou un gel, dont la viscosité est modifiée en fonction d'une tension électrique.
